# EUROPÄISCHE PATENTSCHRIFT

(11) **EP 3 766 640 B1**
(45) Veröffentlichungstag und Bekanntmachung des Hinweises auf die Patenterteilung: **23.08.2023**
(21) Anmeldenummer: 20183911.5
(22) Anmeldetag: 03.07.2020
(51) Int. Cl.: H01F 7/02, H01F 7/04, B25H 1/00

(54) **MAGNETFUSS**
MAGNETIC BASE
PIED MAGNÉTIQUE

(30) Priorität: 12.07.2019 DE 202019103844 U
(43) Veröffentlichungstag der Anmeldung: 20.01.2021
(73) Patentinhaber: C. & E. Fein GmbH, 73529 Schwäbisch Gmünd-Bargau (DE)
(72) Erfinder: Seebauer, Ralf, 73529 Schwäbisch Gmünd-Bargau (DE); Gosnik, Ralf, 73054 Eislingen (DE)
(74) Vertreter: Wallinger, Michael

(56) Entgegenhaltungen:
- DE-A1-102008 034 773
- US-A- 2 209 558
- US-A- 5 040 299
- US-A- 5 275 514
- US-A1- 2014 314 507

## Beschreibung

Die Erfindung betrifft einen Magnetfuß für eine Elektrowerkzeugmaschine, insbesondere für eine Magnetkernbohrmaschine, mit einem Grundkörper, der eine Auflagefläche zur Kontaktierung eines zu bearbeitenden Werkstücks aufweist und in dem mindestens ein erster Permanentmagnet und mindestens ein zweiter Permanentmagnet aufgenommen sind, deren Magnetkräfte zu einer resultierenden Haltekraft zusammenwirken. Außerdem betrifft die Erfindung eine Elektrowerkzeugmaschine und andere Haltemittel.

Magnetfüße sind aus dem Stand der Technik bereits seit langem bekannt und werden häufig als Teil eines Bohrständers dafür verwendet, Bohrmaschinen und insbesondere Kernbohrmaschinen mittels Magnetkraft auf dem Werkstück zu befestigen, das bearbeitet werden soll. Ein derartiger Magnetfuß gemäß dem Oberbegriff des Anspruchs 1 ist dementsprechend aus der US 5 040 299 A bekannt. Üblicherweise werden hierfür Elektromagnete verwendet, die über die Spannungsversorgung der damit gekoppelten Elektrowerkzeugmaschine ebenfalls mit elektrischer Energie versorgt werden, was sich in der Vergangenheit auch sehr bewährt hat. Allerdings ergibt sich dabei der Nachteil, dass die magnetische Haltekraft dieser Elektromagnete im Falle einer Stromunterbrechung schlagartig nachlässt. Daraus resultiert letztlich die Gefahr, dass sich die zuvor mit dem Elektromagneten gesicherte Elektrowerkzeugmaschine von dem Werkstück lösen kann, was mit einer nicht unerheblichen Verletzungsgefahr für den Nutzer der Elektrowerkzeugmaschine verbunden ist. Diese Problematik tritt insbesondere dann auf, wenn die Elektrowerkzeugmaschine mit dem Magnetfuß an dem Werkstück über Kopf befestigt wurde. In diesem Fall ist es dann notwendig, die Elektrowerkzeugmaschine zusätzlich noch mit einem Sicherungsmittel, wie einem Gurt oder dergleichen, an dem Werkstück zu sichern.

Zudem finden diese Magnetfüße auch bei anderen Haltemittel Verwendung. So werden die eingangs genannten Magnetfüße unter anderem auch bei Schraubstöcken, Hebezeugen und Schweißwinkel verwendet.

Da aber zunehmend der Kundenwunsch besteht, sich von der Kabelgebundenheit der Elektrowerkzeugmaschinen zu lösen, werden heutzutage auch vergleichsweise große Elektrowerkzeugmaschinen, wie Magnetkernbohrmaschinen von Akkus mit elektrischer Energie gespeist. Die begrenzte Kapazität dieser Akkus macht es dann jedoch erforderlich, auf Elektromagneten zu verzichten und stattdessen schaltbare Permanentmagnete zu verwenden. Anderenfalls, wenn also auch der Magnetfuß zur Erzeugung der Haltekraft von dem Akku mit elektrischer Energie versorgt werden müsste, würde sich dies negativ auf die Nutzungsdauer der Elektrowerkzeugmaschine auswirken. Um dabei die resultierende magnetische Haltekraft variieren zu können, werden bei diesen Magnetfüßen die Orientierung von in dem Magnetfuß befindlichen Permanentmagneten und damit deren Magnetfeldlinien mechanisch verändert, indem einer oder mehrere der Permanentmagnete gegenüber dem oder den anderen Permanentmagneten gedreht werden. Hierdurch lässt sich dann die resultierende Haltekraft des Magnetfußes verändern und der Magnetfuß einschalten bzw. ausschalten.

Ein Magnetfuß der eingangs genannten Art ist beispielsweise aus der US 2016/0001440 A1 bekannt. Hier hat sich jedoch die Verstellung des zweiten Permanentmagneten relativ zu dem ersten Permanentmagneten als nachteilig erwiesen, da hierfür ein vergleichsweise komplexer Getriebeaufbau erforderlich ist. Außerdem ist der aus dem Stand der Technik bekannte Magnetfuß sehr hoch, was insbesondere bei räumlich beengten Verhältnissen nachteilig ist.

Insbesondere beim Verwenden von Magnetkernbohrmaschinen in räumlich begrenzten Verhältnissen, wie beispielsweise einem I-Träger, der auch als Doppel-T-Träger bezeichnet wird, hat es sich zudem als nachteilig erwiesen, dass die Verstellung des zweiten Permanentmagneten, der zum Ein- und Ausschalten des Magnetfußes üblicherweise um 180° gedreht werden muss, um so dessen Polarität umzukehren, mit dem Verstellmittel nur sehr schwer erfolgen kann, da hier die Platzverhältnisse so begrenzt sind, dass das Verstellmittel vom Nutzer nur schwer ergriffen und verdreht werden kann. Außerdem hat es sich als nachteilig erwiesen, dass die Magnetfüße erst ab einer gewissen Materialstärke verwendet werden können, da ansonsten die resultierende Haltekraft zu gering ist, um den Magnetfuß und damit die Elektrowerkzeugmaschine an dem Werkstück sicher zu befestigen.

Der vorliegenden Erfindung liegt daher die Aufgabe zugrunde, einen Magnetfuß bereitzustellen, der die oben genannten Nachteile reduziert und insbesondere eine Betätigung des Magnetfußes auch in räumlich schwer zugänglicher Umgebung erleichtert.

Außerdem ist es Aufgabe der Erfindung, eine verbesserte Elektrowerkzeugmaschine, die sich insbesondere in beengten Platzverhältnissen einfach bedienen lässt oder eine verbesserteKombination eines Magnetfußes mit einem Haltemittel bereitzustellen.

Die den Magnetfuß betreffende Aufgabe wird gemäß der Erfindung bei einem Magnetfuß der eingangs genannten Art dadurch gelöst, dass der mindestens eine erste Permanentmagnet und der mindestens eine zweite Permanentmagnet zwischen einer ersten Stellung, in der die resultierende Haltekraft des Magnetfußes maximiert ist, und einer zweiten Stellung, in der die resultierende Haltekraft des Magnetfußes minimiert ist, jeweils um eine eigene Drehachse drehbar in dem Grundkörper gelagert ist.

Indem letztlich alle Permanentmagnete verdreht werden, die in dem Magnetfuß vorhanden sind, wird ein sehr kompakter Aufbau des Magnetfußes erreicht. Außerdem lässt sich hierdurch erreichen, dass die resultierende Haltekraft auch bei Werkstücken mit nur einer sehr geringen Materialstärke so groß ist, dass es möglich wird, den erfindungsgemäßen Magnetfuß darauf zu befestigen. Da letztlich alle Permanentmagnete, die zu der resultierenden Haltekraft beitragen, verdreht werden, ist es hierdurch zudem ausreichend, die Permanentmagnete jeweils lediglich um 90° zwischen der ersten Stellung und der zweiten Stellung verdrehen zu müssen, was sich damit letztlich positiv auf die Handhabung des Magnetfußes in räumlich beengten Verhältnissen auswirkt.

Besonders bewährt hat es sich dabei auch, wenn die ersten Permanentmagnete und die zweiten Permanentmagnete alternierend angeordnet sind. Hierdurch lässt sich ein besonders einfacher Aufbau des Magnetfußes realisieren und gleichzeitig die resultierende Magnetkraft besonders einfach einstellen.

Dies wird noch dadurch weiter positiv begünstigt, wenn in der ersten Stellung die Pole benachbarter Permanentmagnete gleicher Polarität aufeinander zuweisen. Durch das aufeinander Zuweisen der die gleiche Polarität aufweisenden Pole benachbarter Permanentmagnete in der ersten Stellung kommt es zu einem Abstoß dieser benachbarten Permanentmagnete, wodurch deren Magnetfeldlinien in das Werkstück umgelenkt werden, auf dem der Magnetfuß aufgesetzt ist. Hierbei wird dann ein entsprechendes Gegenfeld erzeugt und die resultierende Haltekraft maximiert. Der Magnetfuß lässt sich also auf dem Werkstück sichern.

In diesem Zusammenhang hat es sich dann auch als vorteilhaft erwiesen, wenn in der zweiten Stellung die auf die Auflagefläche zuweisenden Pole benachbarter Permanentmagnete ungleiche Polarität aufweisen. Hierdurch ziehen sich die benachbarten Permanentmagnete gegenseitig an und die resultierende Haltekraft des Magnetfußes wird minimiert. Der Magnetfuß lässt sich dann vom Werkstück entfernen.

Als besonders günstig hat es sich auch gezeigt, wenn die Drehachsen der ersten Permanentmagnete und die Drehachsen der zweiten Permanentmagnete in einer Ebene angeordnet sind. Hierdurch kann eine gemeinsame Verstellung der Permanentmagnete besonders einfach sichergestellt werden. Wenn zudem die Ebene im Wesentlichen parallel zu der Auflagefläche ist, kann außerdem noch erreicht werden, dass die Permanentmagnete allesamt einen gleichen Abstand zu dem Werkstück aufweisen, wodurch die Haltekraft besonders gleichmäßig wird. Im Rahmen der Erfindung ist es aber auch vorgesehen, dass der Magnetfuß auf konvexen Werkstücken, wie beispielsweise Rohren, verwendet wird. Insbesondere in diesem Zusammenhang hat es sich dann als günstig erwiesen, wenn die Drehachsen der ersten Permanentmagnete und der zweiten Permanentmagnete einen konstanten Abstand zu der Auflagefläche aufweisen. Insbesondere kann dabei zudem die Auflagefläche auch an die Kontur des Werkstücks angepasst sein und beispielsweise konkav gestaltet sein.

Wenn die Anzahl der ersten Permanentmagnete und die Anzahl der zweiten Permanentmagnete gleich ist, kann eine besondere einfache Verstellung zwischen der minimalen und der maximalen resultierenden Haltekraft erfolgen.

Um den Magnetfuß zwischen der ersten Stellung und der zweiten Stellung verstellen zu können, hat es sich auch als günstig gezeigt, wenn ein Verstellmittel vorgesehen ist zum simultanen Drehen der ersten Permanentmagnete und der zweiten Permanentmagnete zwischen der ersten Stellung und der zweiten Stellung um die jeweilige Drehachse.

Als vorteilhaft hat es sich auch gezeigt, wenn das Verstellmittel zwischen einer ersten Endstellung, in der sich die ersten Permanentmagnete und die zweiten Permanentmagnete in der ersten Stellung befinden, und einer zweiten Endstellung, in der sich die ersten Permanentmagnete und die zweiten Permanentmagnete in der zweiten Stellung befinden, verstellbar ist. Insbesondere wenn die beiden Endstellungen durch Anschläge begrenzt sind, wird hierdurch sichergestellt, dass die Verstellung der ersten und zweiten Permanentmagnete über die erste und zweite Stellung hinaus nicht möglich ist, was sich somit positiv auf die Benutzerfreundlichkeit des Magnetfußes auswirkt.

Bewährt hat es sich zudem, wenn zur Übertragung der Verstellung des Verstellmittels auf die Drehachsen der ersten Permanentmagnete und der zweiten Permanentmagnete ein Koppelmechanismus vorgesehen ist. Durch den Koppelmechanismus lässt sich die Verstellung des Verstellmittels besonders einfach auf die ersten und zweiten Permanentmagnete übertragen und diese damit um die jeweiligen Drehachsen zwischen der ersten Stellung und der zweiten Stellung drehen.

Als besonders günstig hat es sich auch gezeigt, wenn der Koppelmechanismus einen Verzahnungseingriff zwischen einem Ritzel und mindestens einer Zahnstange umfasst. Hierdurch lässt sich eine besonders gute Kraft- und Bewegungsübertragung realisieren. In diesem Zusammenhang hat es sich dann auch bewährt, wenn die Zahnstange durch das Verstellmittel verschiebbar an dem Grundkörper gelagert ist. Wird das Verstellmittel vom Nutzer bewegt, so wird die im Verzahnungseingriff mit den den Permanentmagneten zugeordneten Ritzel stehende Zahnstange verschoben und verdreht dabei die Permanentmagnete um ihre jeweilige Drehachse.

Alternativ oder ergänzend hat es sich aber auch als günstig erwiesen, wenn der Koppelmechanismus ein Koppelgestänge umfasst. Hierdurch wird ebenfalls eine einfache Methode gebildet, durch die es für den Nutzer möglich ist, lediglich das Verstellmittel zu ergreifen und zwischen den Endstellungen zu verstellen und damit gleichzeitig die Permanentmagnete zwischen der ersten Stellung und der zweiten Stellung zu drehen.

Letztlich hat es sich auch als vorteilhaft erwiesen, wenn die Gesamtzahl der ersten und zweiten Permanentmagnete zwischen 2 und 10 und besonders bevorzugt bei 4 liegt. Je größer die Gesamtzahl der verwendeten Permanentmagnete ist, desto kleiner können die einzelnen Permanentmagnete ausgelegt werden, wodurch sich dünnere Magnetfüße realisieren lassen. Gleichzeitig wird hierdurch aber auch der mechanische Aufwand größer, so dass sich 4 Permanentmagnete als besonders vorteilhaft erwiesen haben.

Die die Elektrowerkzeugmaschine betreffende Aufgabe wird gemäß der Erfindung durch eine Kombination eines Magnetfußes nach einem der Ansprüche 1 bis 12 mit einer Elektrowerkzeugmaschine gelöst. Die das Haltemittel betreffende Aufgabe wird gemäß der Erfindung durch eine Kombination eines Magnetfußes nach einem der Ansprüche 1 bis 12 und einem Haltemittel gelöst, das ausgewählt ist aus einer Gruppe, die Schraubstöcke, Hebezeuge und Schweißwinkel umfasst.

Wenn das Haltemittel als Schweißwinkel ausgebildet ist, hat es sich als besonders günstig erwiesen, wenn dem als Schweißwinkel ausgeführten Haltemittel zwei Magnetfüße zugeordnet sind, die gelenkig miteinander verbunden sind, wobei der Winkel zwischen den Magnetfüßen einstellbar ist. Hierdurch kann der Schweißwinkel besonders einfach an die durch den Schweißvorgang zu verbindenden Teil angepasst werden. Hierbei hat es sich auch besonders bewährt, wenn der Winkel festellbar ist.

Wenn das Haltemittel als Schraubstock ausgebildet ist, hat es sich auch bewährt, wenn bei dem als Schraubstock ausgeführten Haltemittel der Magnetfuß zur Befestigung des Schraubstockes auf dem Werkstück vorgesehen ist. Hierdurch kann erreicht werden, dass der Schraubstock an beliebiger Position auf einem magnetischen Untergrund befestigt werden kann. Im Rahmen der Erfindung kann auch einer oder beide der Spannbacken des Schraubstocks einen erfindungsgemäßen Magnetfuß beinhalten.

Im Folgenden wird die Erfindung an einem in den Zeichnungen dargestellten Ausführungsbeispiel näher erläutert; es zeigen:
- Fig. 1: eine Explosionsansicht eines Magnetfußes,
- Fig. 2: einen Längsschnitt durch den Magnetfuß,
- Fig. 3: eine perspektivische Detailansicht auf einen ersten Koppelmechanismus eines Magnetfußes,
- Fig. 4: eine perspektivische Detailansicht auf einen zweiten Koppelmechanismus eines Magnetfußes,
- Fig. 5: eine Schnittansicht entlang des Schnittes A-A aus der Figur 2 mit maximaler resultierender Haltekraft,
- Fig. 6: die Magnetfeldlinien der Permanentmagnete aus der Figur 6,
- Fig. 7: eine Schnittansicht entlang des Schnittes A-A aus der Figur 2 mit minimaler resultierender Haltekraft,
- Fig. 8: die Magnetfeldlinien der Permanentmagnete aus der Figur 8,
- Fig. 9: ein Diagramm der Haltekraft in Abhängigkeit von der Plattendicke,
- Fig. 10: eine perspektivische Ansicht eines Schraubstocks mit einem Magnetfuß,
- Fig. 11: eine perspektivische Ansicht eines Schweißwinkels mit mehreren Magnetfüßen,
- Fig. 12: eine perspektivische Ansicht einer ersten Ausführungsform eines Hebezeugs mit einem Magnetfuß, und
- Fig. 13: eine perspektivische Ansicht einer zweiten Ausführungsform eines Hebezeugs mit einem Magnetfuß.

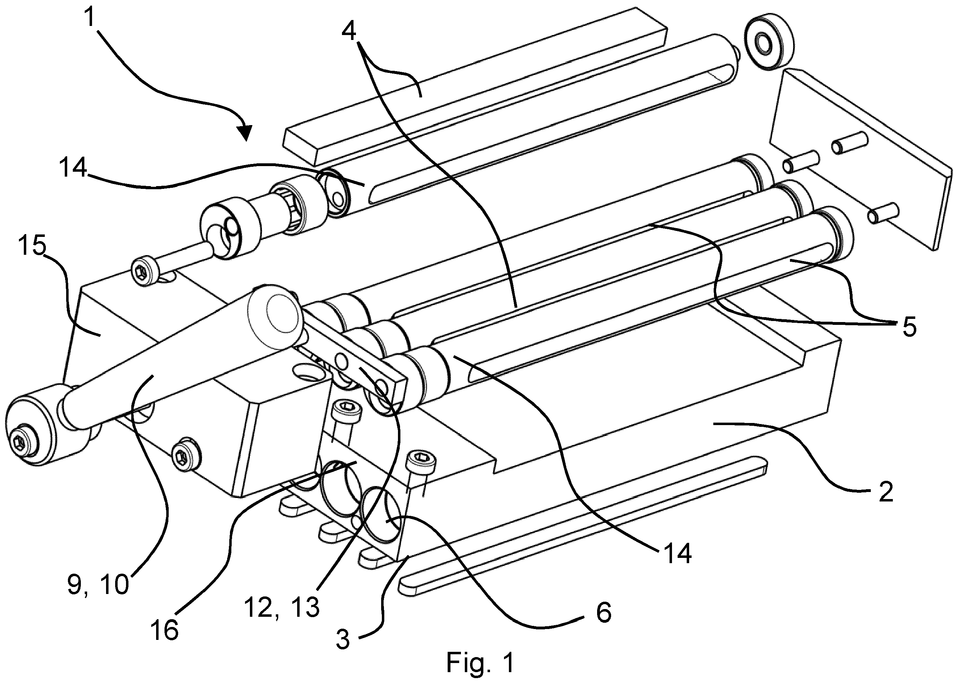

Figur 1 zeigt in einer Explosionsansicht einen Magnetfuß 1 für eine Magnetkernbohrmaschine. Der Magnetfuß 1 weist dabei einen Grundkörper 2 auf mit einer Auflagefläche 3 zur Kontaktierung eines zu bearbeitenden Werkstücks 8. In dem Grundkörper 2 sind mehrere erste Permanentmagnete 4 und zweite Permanentmagnete 5 angeordnet, deren Magnetkräfte zu einer resultierenden Haltekraft zusammenwirken. Die ersten Permanentmagnete 4 und die zweiten Permanentmagnete 5, die sich letztlich nur hinsichtlich Ihrer Polanordnung unterscheiden, sind dabei alternierend in Aufnahmen 6 angeordnet, die in dem Grundkörper 2 ausgebildet sind. In diesen Aufnahmen 6 sind die ersten Permanentmagnete 4 und die zweiten Permanentmagnete 5 zwischen einer ersten Stellung, in der die resultierende Haltekraft des Magnetfußes 1 maximiert ist, und einer zweiten Stellung, in der die resultierende Haltekraft des Magnetfußes 1 minimiert ist, jeweils um eine eigene Drehachse 7 drehbar gelagert.

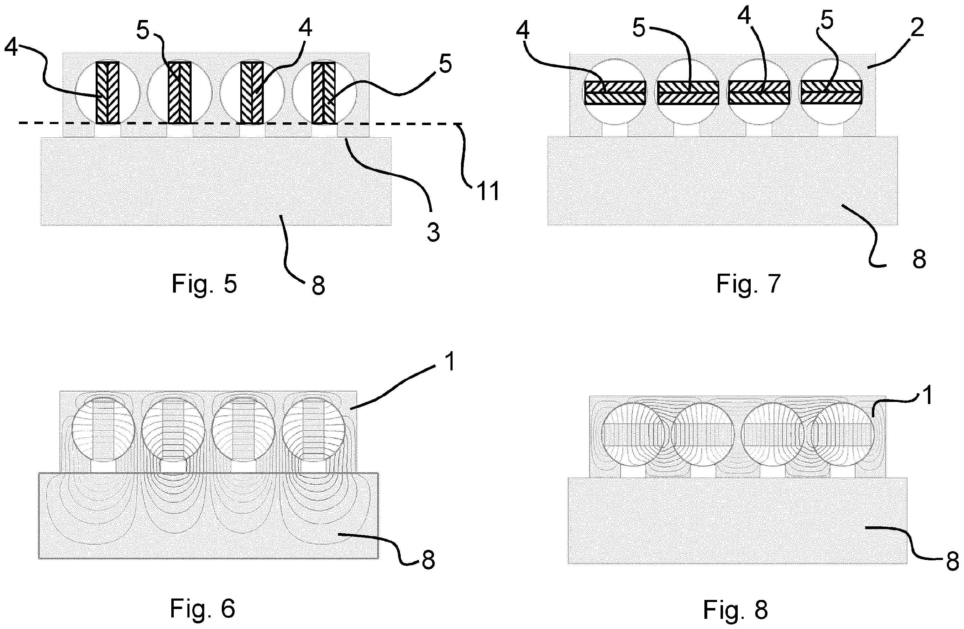

In der ersten Stellung weisen die Pole benachbarter Permanentmagnete 4, 5, die aufeinander zu zeigen, die gleiche Polarität zueinander auf. Hierdurch kommt es zu einem Abstoßen der Permanentmagnete 4, 5, wodurch die Feldlinien aus dem Magnetfuß 1 heraustreten und in dem Werkstück 8 ein Gegenfeld erzeugen, wodurch die resultierende Haltekraft maximiert wird, wie mit Bezug auf die Figuren 5 bis 8 noch näher erläutert werden wird. In der zweiten Stellung der Permanentmagnete 4, 5 weisen die auf die Auflagefläche 3 zuweisenden Pole benachbarter Permanentmagnete 4, 5 ungleiche Polarität auf. Hierdurch ziehen sich die Permanentmagnete 4, 5 an und die Feldlinien der Permanentmagnete 4, 5 bleiben letztlich im Magnetfuß 1. Damit ist die resultierende Haltekraft minimiert und der Magnetfuß 1 kann vom Werkstück 8 abgenommen werden.

Zur Verstellung der ersten Permanentmagnete 4 und der zweiten Permanentmagnete 5 ist außerdem ein Verstellmittel 9 vorgesehen, das als ein Handgriff 10 ausgebildet ist. Dieser kann vom Nutzer ergriffen werden und ist zwischen einer ersten Endstellung, in der sich die ersten Permanentmagnete 4 und die zweiten Permanentmagnete 5 in der ersten Stellung befinden, und einer zweiten Endstellung, in der sich die ersten Permanentmagnete 4 und die zweiten Permanentmagnete 5 in der zweiten Stellung befinden, verstellbar. Mit diesem Handgriff 10 lassen sich die in dem Magnetfuß 1 angeordneten Permanentmagnete 4, 5 zwischen der ersten Stellung und der zweiten Stellung simultan um die jeweilige Drehachse 7 verdrehen, um damit die resultierende Haltekraft des Magnetfußes 1 zu verändern. Wie der Figur 1 und insbesondere auch den Figuren 5 bis 8 zu entnehmen ist, sind die Drehachsen 7 der ersten Permanentmagnete 4 und der zweiten Permanentmagnete 5 in einer Ebene 11 angeordnet, die parallel zu der Auflagefläche 3 ist. In dem gezeigten Ausführungsbeispiel sind insgesamt 2 erste Permanentmagnete 4 und 2 zweite Permanentmagnete 5 vorgesehen, deren Magnetkräfte sich zu einer resultierenden Haltekraft ergänzen.

Um die Verstellung des Verstellmittels 9 auf die Drehachsen 7 der ersten Permanentmagnete 4 und der zweiten Permanentmagnete 5 zu übertragen ist ein Koppelmechanismus 12 vorgesehen, der in dem gezeigten Ausführungsbeispiel ein Koppelgestänge 13 umfasst. Wird also das Verstellmittel 9 vom Nutzer aus der zweiten Endstellung in die erste Endstellung überführt, so werden durch das Koppelgestänge 13 auch die ersten Permanentmagnete 4 und zweiten Permanentmagnete 5 simultan aus der zweiten Stellung in die erste Stellung überführt, also um die Drehachsen 7 gedreht.

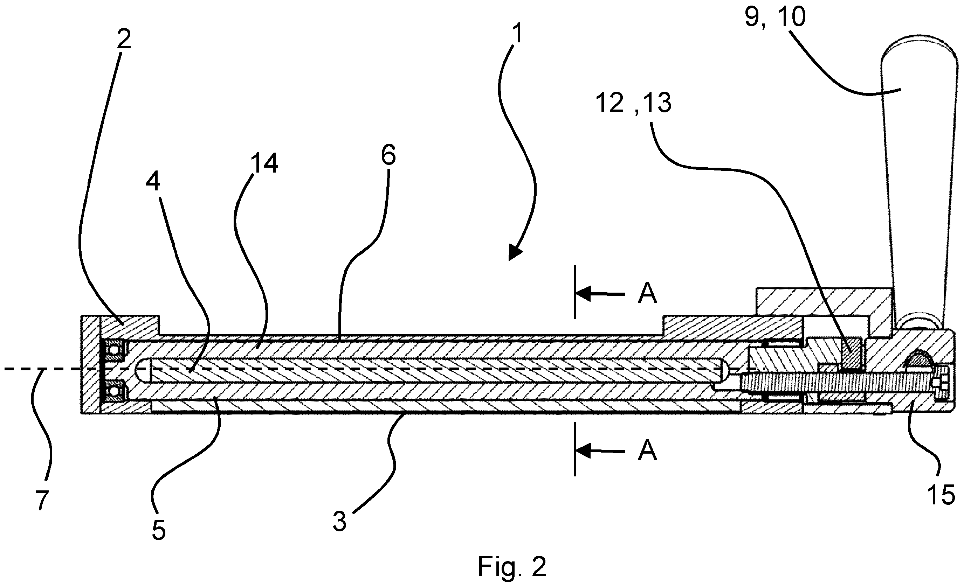

Figur 2 zeigt eine Ansicht entlang eines Längsschnitts durch den Magnetfuß 1. Hieraus ist insbesondere die Anordnung der Permanentmagnete 4, 5 in dem Grundkörper 2 zu erkennen. Diese weisen einen rechteckigen Querschnitt auf und sind in einer zylinderförmigen Ummantelung 14 aufgenommen, die in der Aufnahme 6 des Grundkörpers 2 drehbar befestigt ist. An einer Stirnseite 16 des Magnetfußes 1, die dem Verstellmittel 9 zugewandt ist, ist eine Abdeckung 15 befestigt, in der der Koppelmechanismus 12 aufgenommen ist.

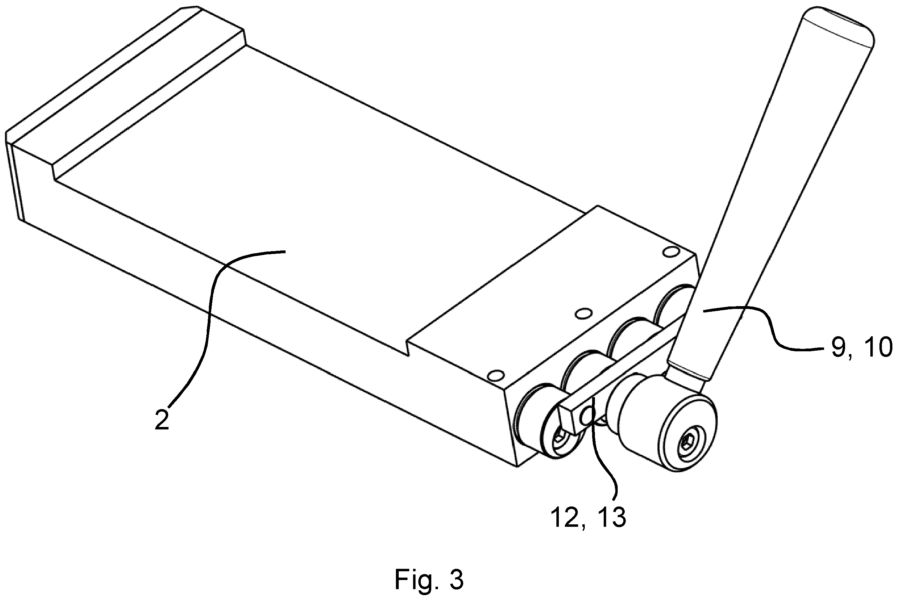

Figur 3 zeigt in einer Detailansicht den Koppelmechanismus 12 des abdeckungslos dargestellten Magnetfußes 1, der das Koppelgestänge 13 aufweist. Dieses ist exzentrisch zu den jeweiligen Drehachsen 7 an den Stirnseiten der Permanentmagnete 4, 5 bzw. derer Ummantelung 14 befestigt, so dass eine Verstellung des Verstellmittels 9 zu einem Verdrehen der mit dem Koppelgestänge 13 verbundenen Permanentmagnete 4, 5 um die jeweiligen Drehachsen 7 führt.

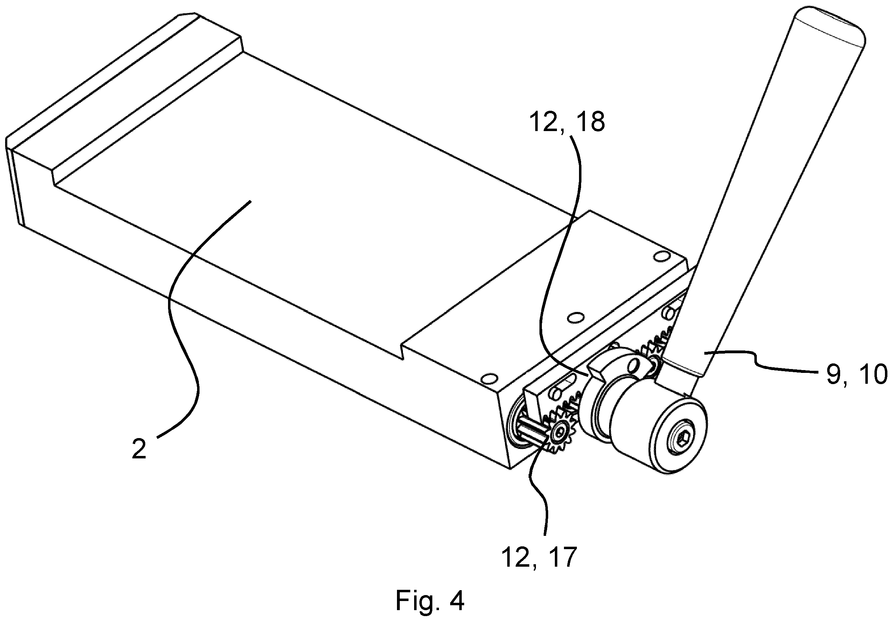

In der in der Figur 4 dargestellten Ausführungsform des Magnetfußes 1 sind mit den Permanentmagneten 4, 5 bzw. deren Ummantelung 14 Ritzel 17 verbunden, die sich im Verzahnungseingriff mit einer Zahnstange 18 befinden. Diese Zahnstange 18 ist mit dem Verstellmittel 9 verbunden und in dem Grundkörper 2 verschiebbar gelagert. Verstellt also der Nutzer das Verstellmittel 9, so wird die Zahnstange 18 verschoben und damit die im Verzahnungseingriff befindlichen Ritzel 17 verdreht.

In den Figuren 5 bis 8 sind jeweils in einem Querschnitt entlang des Schnittes A-A aus der Figur 2 die Permanentmagnete 4, 5 des Magnetfußes 1 dargestellt. Die Figuren 5 und 6 zeigen dabei die Permanentmagnete 4, 5 in der ersten Stellung, in der die resultierende Haltekraft der Permanentmagnete 4, 5 maximiert ist. In den Figuren 7 und 8 befinden sich die Permanentmagnete 4, 5 in der zweiten Stellung, in der die resultierende Haltekraft minimiert ist. In den Figuren 5 und 7 weisen Pole gleicher Polarität die gleiche Schraffur auf.

In der in den Figuren 5 und 6 dargestellten ersten Stellung der Permanentmagnete 4, 5 sind diese so angeordnet, dass die aufeinander zuweisenden Pole benachbarter Permanentmagnete 4, 5 die gleiche Polarität aufweisen und sich damit abstoßen, wie insbesondere den Magnetfeldlinien entnommen werden kann, die in der Figur 6 dargestellt sind. Hierdurch wird in dem Werkstück 8 ein Gegenfeld induziert. Das Abstoßen benachbarter Permanentmagnete 4, 5 führt also letztlich dazu, dass die resultierende Haltekraft des Magnetfußes 1 maximiert wird.

In der zweiten Stellung der Permanentmagnete 4, 5, die in den Figuren 7 und 8 dargestellt ist, sind die Permanentmagnete 4, 5 so zueinander orientiert, dass sich die benachbarten Permanentmagnete 4, 5 gegenseitig anziehen, wodurch die Magnetfeldlinien im Wesentlichen ausschließlich innerhalb der Permanentmagnete 4, 5 verlaufen. Die resultierende Haltekraft des Magnetfußes 1 wird dadurch minimiert.

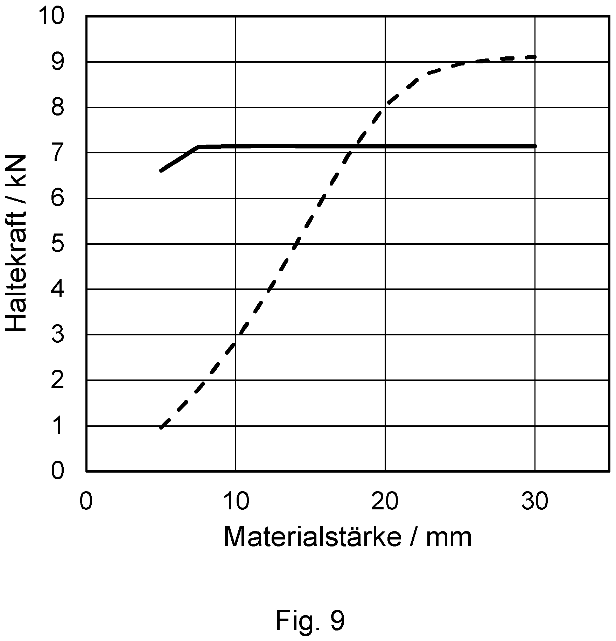

Das in der Figur 9 dargestellte Diagramm zeigt die resultierende Haltekraft des Magnetfußes 1 in Abhängigkeit von der Materialstärke des Werkstücks 8, auf dem der Magnetfuß 1 aufgesetzt wird. Hierbei sind insgesamt zwei Kurven zu erkennen. Mit der durchgehenden Kurve wird der Verlauf der Haltekraft des erfindungsgemäßen Magnetfußes 1 dargestellt und mit der unterbrochenen Kurve der Haltekraftverlauf der aus dem Stand der Technik bekannten Magnetfüße 1, bei denen üblicherweise nur zwei Permanentmagnete 4, 5 vorgesehen sind, die in einer senkrecht zu dem Werkstück 8 ausgerichteten Ebene 11 angeordnet sind und von denen lediglich einer gegenüber dem anderen, feststehenden gedreht wird. Während bei dem konventionellen Magnetfuß 1 die resultierende Haltekraft mit zunehmender Materialstärke des Werkstücks 8 ansteigt, ist bei dem erfindungsgemäßen Magnetfuß 1 bereits ab einer sehr geringen Materialstärke die resultierende Haltekraft konstant, wenn auch auf einem niedrigeren Wert, als bei einem aus dem Stand der Technik bekannten Magnetfuß 1.

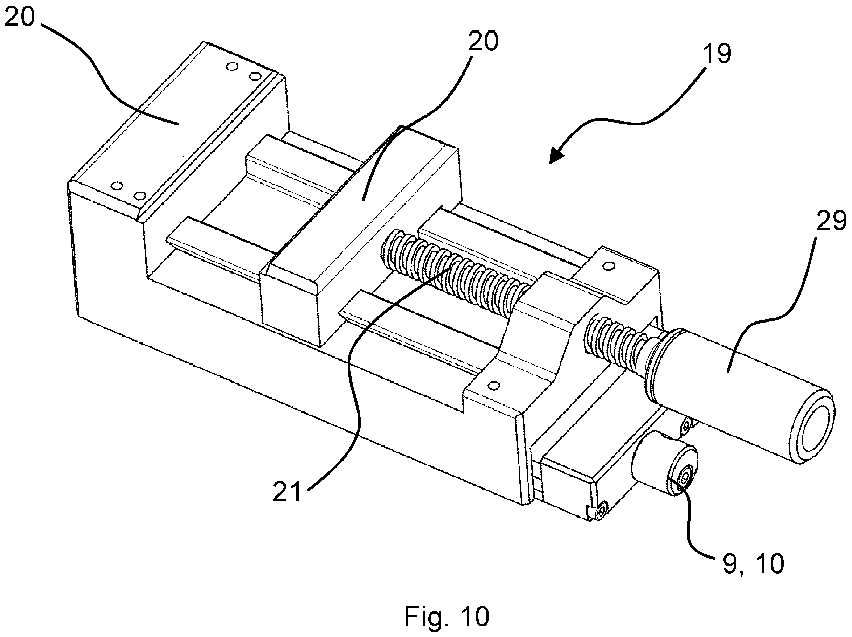

Figur 10 zeigt in einer perspektivischen Ansicht einen Schraubstock 19, der durch einen Magnetfuß 1 auf einer magnetischen Oberfläche befestigt werden kann. Hierzu muss der Nutzer lediglich den Schraubstock 19 auf der Oberfläche positionieren und den als Verstellmittel 9 dienenden Handgriff 10 aus der zweiten Endstellung in die erste Endstellung überführen. Dann kann der Nutzer das zwischen den Spannbacken 20 des Schraubstocks befindliche 19 Werkstück fixieren, indem er die Spannbacken 20 mittels eines Spindeltriebs 21 relativ zu einander verstellt. In dem gezeigten Ausführungsbeispiel ist dabei lediglich eine der Spannbacken 20 durch ein Betätigungsmittel 29 verstellbar, währen die andere Spannbacke 20 fest an dem Magnetfuß 1 montiert ist.

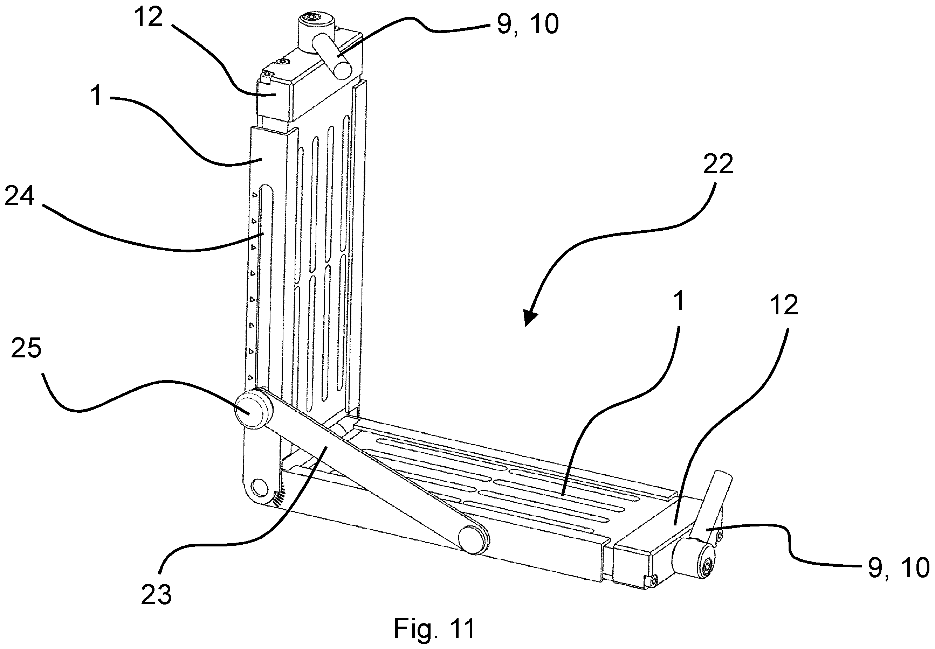

Figur 11 zeigt ebenfalls in einer perspektivischen Ausführungsform einen Schweißwinkel 22, bei dem zwei Magnetfüße 1 verwendet werden. Diese Magnetfüße 1 sind dabei gelenkig miteinander verbunden, um so den Winkel zwischen beiden verstellen zu können. Um die Bedienung hierbei zu erleichtern ist ein Führungsarm 23 vorgesehen, der an einem der Magnetfüße 1 drehbar befestigt ist und an dem anderen in einer Führungsschiene 24 verschiebbar und verdrehbar gelagert ist. In dieser Führungsschiene 24 ist der Führungsarm 23 durch eine Feststellschraube 25 dann arretierbar, wodurch sich der Winkel zwischen den beiden Magnetfüßen 1 festlegen lässt. Wenn der Winkel an die Schweißsituation angepasst ist, können die beiden zu verschweißenden Bauteilen jeweils an einem der Magnetfüße 1 befestigt werden, indem jeweils der als Verstellmittel 9 dienenden Handgriff 10 aus der zweiten Endstellung in die erste Endstellung überführt wird.

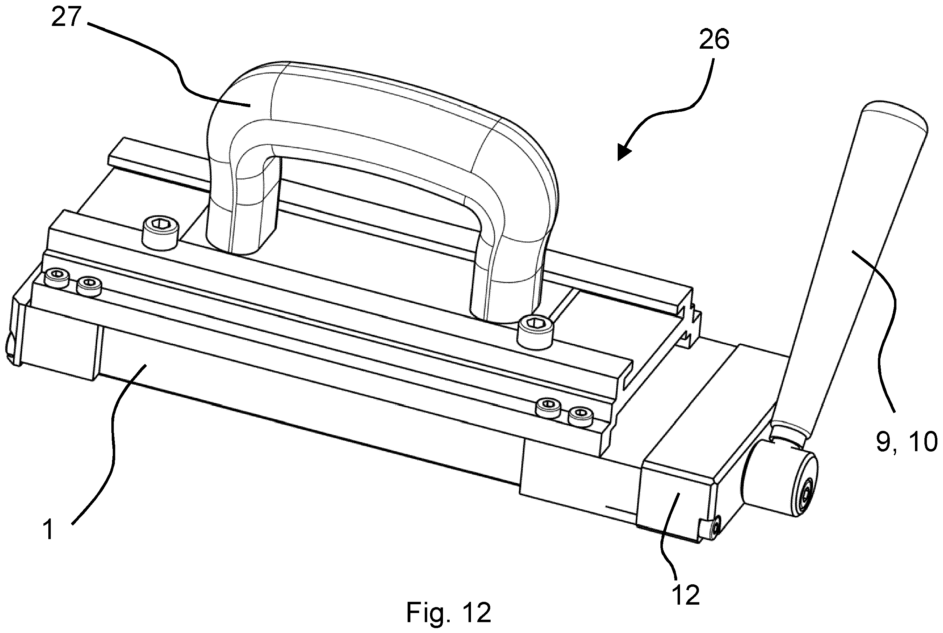

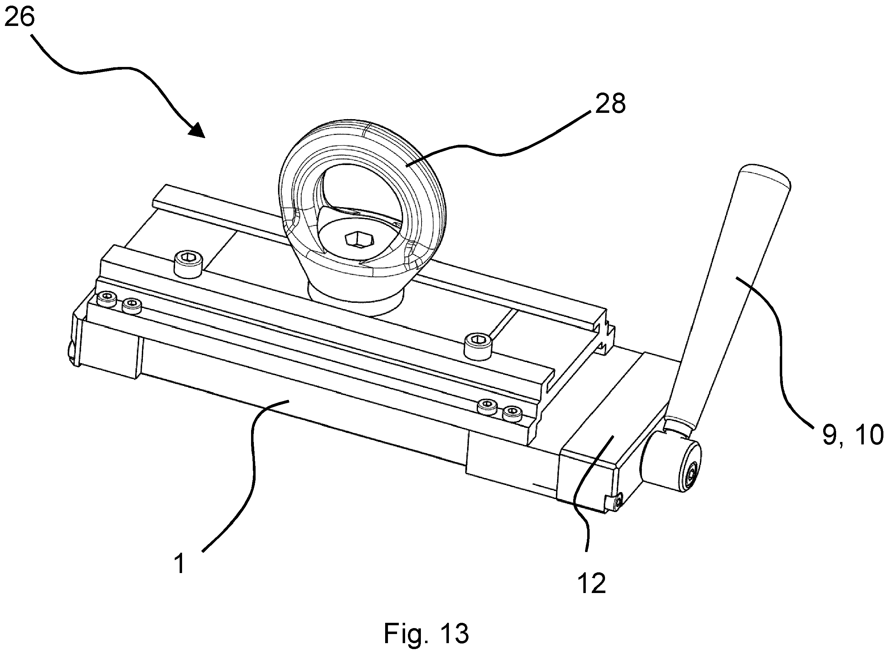

Figur 12 zeigt zudem eine erste Ausführungsform eines Hebezeugs 26, mit dem es möglich ist, magnetische Werkstücke anzuheben oder auch zu transportieren. Hierzu ist an dem Magnetfuß 1 ein Handgriff 27 angebracht, der es dem Nutzer ermöglicht, das mit dem zu transportierenden Werkstück gekoppelten Hebezeug 26 zu ergreifen und anzuheben. Auch kann das Hebezeug 26 dazu verwendet werden, das Werkstück auszurichten. Um das Hebezeug 26 auch an einem Kran oder einem Hebearm befestigen zu können, ist bei einer zweiten Ausführungsform, die in der Figur 13 dargestellt ist, eine Aufnahmeöse 28 ausgebildet, in die beispielsweise ein Kranhaken eingehängt werden kann.

### Bezugszeichenliste

- 1: Magnetfuß
- 2: Grundkörper
- 3: Auflagefläche
- 4: erster Permanentmagnet
- 5: zweiter Permanentmagnet
- 6: Aufnahme
- 7: Drehachse
- 8: Werkstück
- 9: Verstellmittel
- 10: Handgriff
- 11: Ebene
- 12: Koppelmechanismus
- 13: Koppelgestänge
- 14: Ummantelung
- 15: Abdeckung
- 16: Stirnseite
- 17: Ritzel
- 18: Zahnstange
- 19: Schraubstock
- 20: Spannbacke
- 21: Spindeltrieb
- 22: Schweißwinkel
- 23: Führungsarm
- 24: Führungsschiene
- 25: Feststellschraube
- 26: Hebezeug
- 27: Handgriff
- 28: Aufnahmeöse
- 29: Betätigungsmittel

## Patentansprüche

1. Magnetfuß (1) für eine Elektrowerkzeugmaschine, insbesondere für eine Magnetkernbohrmaschine, mit einem Grundkörper (2), der eine Auflagefläche (3) zur Kontaktierung eines zu bearbeitenden Werkstücks (8) aufweist und in dem mindestens ein erster Permanentmagnet (4) und mindestens ein zweiter Permanentmagnet (5) aufgenommen sind, deren Magnetkräfte zu einer resultierenden Haltekraft zusammenwirken, wobei der mindestens eine erste Permanentmagnet (4) und der mindestens eine zweite Permanentmagnet (5) zwischen einer ersten Stellung, in der die resultierende Haltekraft des Magnetfußes (1) maximiert ist, und einer zweiten Stellung, in der die resultierende Haltekraft des Magnetfußes (1) minimiert ist, jeweils um eine eigene Drehachse (7) drehbar in dem Grundkörper (2) gelagert ist, **dadurch gekennzeichnet, dass** in der zweiten Stellung die auf die Auflagefläche (3) zuweisenden Pole benachbarter Permanentmagnete (4, 5) ungleiche Polarität aufweisen.

2. Magnetfuß (1) nach Anspruch 1, **dadurch gekennzeichnet, dass** die ersten Permanentmagnete (4) und die zweiten Permanentmagnete (5) alternierend angeordnet sind.

3. Magnetfuß (1) nach Anspruch 1 oder 2, **dadurch gekennzeichnet, dass** in der ersten Stellung die Pole benachbarter Permanentmagnete (4, 5) gleicher Polarität aufeinander zuweisen.

4. Magnetfuß (1) nach einem der Ansprüche 1 bis 3, **dadurch gekennzeichnet, dass** die Drehachsen (7) der ersten Permanentmagnete (4) und die Drehachsen (7) der zweiten Permanentmagnete (5) in einer Ebene (11) angeordnet sind, wobei bevorzugt die Ebene (11) im Wesentlichen parallel zu der Auflagefläche (3) ist.

5. Magnetfuß (1) nach einem der Ansprüche 1 bis 4, **dadurch gekennzeichnet, dass** die Drehachsen (7) der ersten Permanentmagnete (4) und der zweiten Permanentmagnete (5) einen konstanten Abstand zu der Auflagefläche (3) aufweisen.

6. Magnetfuß (1) nach einem der Ansprüche 1 bis 5, **dadurch gekennzeichnet, dass** ein Verstellmittel (9) vorgesehen ist zum simultanen Drehen der ersten Permanentmagnete (4) und der zweiten Permanentmagnete (5) zwischen der ersten Stellung und der zweiten Stellung um die jeweilige Drehachse (7).

7. Magnetfuß (1) nach Anspruch 6, **dadurch gekennzeichnet, dass** das Verstellmittel (9) zwischen einer ersten Endstellung, in der sich die ersten Permanentmagnete (4) und die zweiten Permanentmagnete (5) in der ersten Stellung befinden, und einer zweiten Endstellung, in der sich die ersten Permanentmagnete (4) und die zweiten Permanentmagnete (5) in der zweiten Stellung befinden, verstellbar ist.

8. Magnetfuß (1) nach Anspruch 6 oder 7, **dadurch gekennzeichnet, dass** zur Übertragung der Verstellung des Verstellmittels (9) auf die Drehachsen (7) der ersten Permanentmagnete (4) und der zweiten Permanentmagnete (5) ein Koppelmechanismus (12) vorgesehen ist.

9. Magnetfuß (1) nach Anspruch 8, **dadurch gekennzeichnet, dass** der Koppelmechanismus (12) einen Verzahnungseingriff zwischen einem Ritzel (17) und mindestens einer Zahnstange (18) umfasst.

10. Magnetfuß (1) nach Anspruch 9, **dadurch gekennzeichnet, dass** die Zahnstange (18) durch das Verstellmittel (9) verschiebbar an dem Grundkörper (2) gelagert ist.

11. Magnetfuß (1) nach einem der Ansprüche 8 bis 10, **dadurch gekennzeichnet, dass** der Koppelmechanismus (12) ein Koppelgestänge (13) umfasst.

12. Magnetfuß (1) nach einem der Ansprüche 1 bis 11, **dadurch gekennzeichnet, dass** die Gesamtzahl der ersten Permanentmagnete (4) und zweiten Permanentmagnete (5) zwischen 2 und 10 und besonders bevorzugt bei 4 liegt.

13. Kombination eines Magnetfußes (1) nach einem der Ansprüche 1 bis 12 mit einer Elektrowerkzeugmaschine oder mit einem Haltemittel, das ausgewählt ist aus einer Gruppe, die Schraubstöcke (19), Hebezeuge (26) und Schweißwinkel (22) umfasst.

14. Kombination nach Anspruch 13, **dadurch gekennzeichnet, dass** dem als Schweißwinkel (22) ausgeführten Haltemittel zwei Magnetfüße (1) zugeordnet sind, die gelenkig miteinander verbunden sind, wobei der Winkel zwischen den Magnetfüßen (1) einstellbar ist.

15. Kombination nach Anspruch 13, **dadurch gekennzeichnet, dass** bei dem als Schraubstock (19) ausgeführten Haltemittel der Magnetfuß (1) zur Befestigung des Schraubstockes (19) auf dem Werkstück vorgesehen ist.

## Claims

1. Magnetic foot (1) for a power tool, more particularly for a magnetic core drilling machine, having a base body (2) comprising a bearing surface (3) for contacting a workpiece (8) to be machined and in which at least one first permanent magnet (4) and at least one second permanent magnet (5) are accommodated, the magnetic forces of which interact to form a resultant holding force, wherein the at least one first permanent magnet (4) and the at least one second permanent magnet (5) are each rotatably mounted about their own axis of rotation (7) in the base body (2) between a first position, in which the resultant holding force of the magnetic foot (1) is maximized, and a second position, in which the resultant holding force of the magnetic foot (1) is minimized, **characterized in that**, in the second position, the poles of adjacent permanent magnets (4, 5) which face the bearing surface (3) comprise unequal polarity.

2. Magnetic foot (1) according to claim 1, **characterized in that** the first permanent magnets (4) and the second permanent magnets (5) are arranged alternately.

3. Magnetic foot (1) according to claim 1 or 2, **characterized in that** in the first position the poles of adjacent permanent magnets (4, 5) of the same polarity face each other.

4. Magnetic foot (1) according to any one of claims 1 to 3, **characterized in that** the axes of rotation (7) of the first permanent magnets (4) and the axes of rotation (7) of the second permanent magnets (5) are arranged in a plane (11), preferably the plane (11) being substantially parallel to the bearing surface (3).

5. Magnetic foot (1) according to any one of claims 1 to 4, **characterized in that** the axes of rotation (7) of the first permanent magnets (4) and of the second permanent magnets (5) are at a constant distance from the bearing surface (3).

6. Magnetic foot (1) according to one of claims 1 to 5, **characterized in that** an adjusting means (9) is provided for simultaneously rotating the first permanent magnets (4) and the second permanent magnets (5) between the first position and the second position about the respective axis of rotation (7).

7. Magnetic foot (1) according to claim 6, **characterized in that** the adjusting means (9) is adjustable between a first end position, in which the first permanent magnets (4) and the second permanent magnets (5) are in the first position, and a second end position, in which the first permanent magnets (4) and the second permanent magnets (5) are in the second position.

8. Magnetic foot (1) according to claim 6 or 7, **characterized in that** a coupling mechanism (12) is provided for transmitting the adjustment of the adjusting means (9) to the axes of rotation (7) of the first permanent magnets (4) and the second permanent magnets (5).

9. Magnetic foot (1) according to claim 8, **characterized in that** said coupling mechanism (12) comprises a toothed engagement between a pinion (17) and at least one rack (18).

10. Magnetic foot (1) according to claim 9, **characterized in that** the rack (18) is displaceably mounted on the base body (2) by the adjusting means (9).

11. Magnetic foot (1) according to any one of claims 8 to 10, **characterized in that** the coupling mechanism (12) comprises a coupling linkage (13).

12. Magnetic foot (1) according to any one of claims 1 to 11, **characterized in that** the total number of the first permanent magnets (4) and the second permanent magnets (5) is between 2 and 10, and most preferably 4.

13. Combination of a magnetic foot (1) according to any one of claims 1 to 12 with a power tool or with a holding means selected from a group comprising vises (19), hoists (26) and welding angles (22).

14. Combination according to claim 13, **characterized in that** the holding means configured as a welding angle (22) two magnetic feet (1) are assigned, which are connected to one another in an articulated manner, the angle between the magnetic feet (1) being adjustable.

15. Combination according to claim 13, **characterized in that**, in the case of the holding means designed as a vice (19), the magnetic foot (1) is provided for fastening the vise (19) on the workpiece.

## Revendications

1. Pied magnétique (1) pour une machine-outil électrique, en particulier pour une machine à carotter magnétique, avec un corps de base (2), qui présente une surface d'appui (3) pour la mise en contact avec une pièce (8) à usiner et dans lequel sont logés au moins un premier aimant permanent (4) et au moins un deuxième aimant permanent (5), dont les forces magnétiques interagissent pour former une force de maintien résultante, dans lequel l'au moins un premier aimant permanent (4) et l'au moins un deuxième aimant permanent (5) sont logés dans le corps de base (2) de manière à pouvoir tourner respectivement autour d'un axe de rotation (7) propre entre une première position, dans laquelle la force de maintien résultante du pied magnétique (1) est maximisée, et une deuxième position, dans laquelle la force de maintien résultante du pied magnétique (1) est minimisée, **caractérisé en ce que** les pôles, pointant en direction de la surface d'appui (3), d'aimants permanents (4, 5) adjacents présentent dans la deuxième position une polarité différente.

2. Pied magnétique (1) selon la revendication 1, **caractérisé en ce que** les premiers aimants permanents (4) et les deuxièmes aimants permanents (5) sont disposés en alternance.

3. Pied magnétique (1) selon la revendication 1 ou 2, **caractérisé en ce que** dans la première position, les pôles d'aimants permanents (4, 5) adjacents de même polarité pointent les uns en direction des autres.

4. Pied magnétique (1) selon l'une quelconque des revendications 1 à 3, **caractérisé en ce que** les axes de rotation (7) des premiers aimants permanents (4) et les axes de rotation (7) des deuxièmes aimants permanents (5) sont disposés dans un plan (11), dans lequel le plan (11) est sensiblement parallèle à la surface d'appui (3).

5. Pied magnétique (1) selon l'une quelconque des revendications 1 à 4, **caractérisé en ce que** les axes de rotation (7) des premiers aimants permanents (4) et des deuxièmes aimants permanents (5) présentent une distance constante par rapport à la surface d'appui (3).

6. Pied magnétique (1) selon l'une quelconque des revendications 1 à 5, **caractérisé en ce qu'**un moyen de réglage (9) est prévu pour faire tourner simultanément autour de l'axe de rotation (7) respectif les premiers aimants permanents (4) et les deuxièmes aimants permanents (5) entre la première position et la deuxième position.

7. Pied magnétique (1) selon la revendication 6, **caractérisé en ce que** le moyen de réglage (9) peut être réglé entre une première position finale, dans laquelle les premiers aimants permanents (4) et les deuxièmes aimants permanents (5) se trouvent dans la première position, et une deuxième position finale, dans laquelle les premiers aimants permanents (4) et les deuxièmes aimants permanents (5) se trouvent dans la deuxième position.

8. Pied magnétique (1) selon la revendication 6 ou 7, **caractérisé en ce qu'**un mécanisme d'accouplement (12) est prévu pour la transmission du réglage du moyen de réglage (9) sur les axes de rotation (7) des premiers aimants permanents (4) et des deuxièmes aimants permanents (5).

9. Pied magnétique (1) selon la revendication 8, **caractérisé en ce que** le mécanisme d'accouplement (12) comprend une prise par denture entre un pignon (17) et au moins une crémaillère (18).

10. Pied magnétique (1) selon la revendication 9, **caractérisé en ce que** la crémaillère (18) est montée sur le corps de base (2) de manière à pouvoir être coulissée par le moyen de réglage (9).

11. Pied magnétique (1) selon l'une quelconque des revendications 8 à 10, **caractérisé en ce que** le mécanisme d'accouplement (12) comprend une tringle d'accouplement (13) .

12. Pied magnétique (1) selon l'une quelconque des revendications 1 à 11, **caractérisé en ce que** le nombre total des premiers aimants permanents (4) et des deuxièmes aimants permanents (5) se situe entre 2 et 10 et est de manière particulièrement préférée de l'ordre de 4.

13. Combinaison d'un pied magnétique (1) selon l'une quelconque des revendications 1 à 12 avec une machine-outil électrique ou avec un moyen de maintien qui est choisi parmi un groupe comprenant des étaux (19), des engins de levage (26) et des équerres de soudage (22).

14. Combinaison selon la revendication 13, **caractérisée en ce que** deux pieds magnétiques (1), qui sont reliés l'un à l'autre de manière articulée, sont associés au moyen de maintien réalisé en tant qu'équerre de soudage (22), dans laquelle l'angle entre les pieds magnétiques (1) peut être réglé.

15. Combinaison selon la revendication 13, **caractérisée en ce que** le pied magnétique (1) est prévu pour fixer l'étau (19) sur la pièce lorsque le moyen de maintien est réalisé en tant qu'étau (19).
